Europäisches Patentamt

European Patent Office

Office européen des brevets

(19)

(11) Veröffentlichungsnummer: **0 024 357**
**A1**

(12) **EUROPÄISCHE PATENTANMELDUNG**

(21) Anmeldenummer: **80104956.0**

(22) Anmeldetag: **20.08.80**

(51) Int. Cl.³: **A 47 J 31/043,** A 47 J 31/04

(30) Priorität: **20.08.79 DE 2933635**

(43) Veröffentlichungstag der Anmeldung: **04.03.81**
**Patentblatt 81/9**

(84) Benannte Vertragsstaaten: **AT BE CH DE FR GB IT LI NL SE**

(71) Anmelder: **Forster, Derek Ernest, Sternwarte Strasse 34, A-6020 Innsbruck (AT)**

(72) Erfinder: **Forster, Derek Ernest, Sternwarte Strasse 34, A-6020 Innsbruck (AT)**

(74) Vertreter: **Weickmann, Heinrich, Dipl.-Ing Patentanwälte Dipl.Ing.H.Weickmann et al, Dipl.Phys.Dr.K.Fincke Dipl.Ing.F.A.Weickmann Dipl.Chem.B.Huber, Dr.-Ing.H.Liska Möhlstrasse 22, D-8000 München 86 (DE)**

(54) **Kaffeemaschine.**

(57)    Die Kaffeemaschine umfaßt einen Wasserbehälter (36), auf den abgedichtet ein Kaffeemehlbehälter (37) aufgesetzt werden kann. Vom Boden des Wasserbehälters (36) führt ein Steigrohr (43, 44, 45) zur Oberseite des Kaffeemehlbehälters (37). Am Boden (38) des Kaffeemehlbehälters (37) ist ein Klappenventil (48) vorgesehen, welches eine Öffnung (46, 55) im Boden (38) des Kaffeemehlbehälters (37) verschließen kann. Im Betrieb der Kaffeemaschine wird das Wasser im Wasserbehälter (36) beispielsweise mittels einer Heizeinrichtung (56) zum Kochen gebracht, worauf der Dampfdruck das Klappenventil (48) schließt. Das Wasser wird durch das Steigrohr (43, 44, 45) nach oben in den Kaffeemehlbehälter (37) gedrückt, in welchem sich das Kaffeemehl befindet. Das Klappenventil (48) öffnet, wenn das Wasser im wesentlichen vollständig in den Kaffeemehlbehälter (37) überführt ist, so daß der fertiggestellte Kaffee aus dem Kaffeemehlbehälter (37) in den Wasserbehälter (36) zurückfließen kann.

ACTORUM AG

- 1 -

## Kaffeemaschine

Die Erfindung betrifft eine Kaffeemaschine mit einem dem Einfluß einer Wärmequelle aussetzbaren, verschließbaren Wasserbehälter, einem oberhalb des Wasserbehälters angeordneten Kaffeemehlbehälter, einem das Wasser vom Wasserbehälter nach oben in den Kaffeemehlbehälter leitenden Steigrohr und einer im oberen Bereich des Wasserbehälters sich befindenden Öffnung zwischen Wasserbehälter und Kaffeemehlbehälter, über die das Wasser nach Durchlauf durch den Kaffeemehlbehälter erneut in den Wasserbehälter zurückführbar ist.

Eine derartige Kaffeemaschine ist aus dem französischen Patent 904 398 bekannt. Bei dieser Kaffeemaschine teilt eine Zwischenwand des Wasserbehälters im Bereich der zu erwärmenden Bodenfläche eine zweite Kammer ab, in die über Öffnungen der Zwischenwand das zu erwärmende Wasser eindringen kann. Diese Kammer ist über ein Steigrohr mit einem auf den Wasserbehälter aufsetzbaren Kaffeemehlbehälter verbunden, in den das in der Kammer erhitzte Wasser über das Steigrohr eingeleitet wird. Das Wasser tränkt das Kaffeemehl im Kaffeemehlbehälter und fließt über den als Sieb ausgebildeten Boden des Kaffeemehlbehälter wieder in den Wasserbehälter zurück. Das aus dem Kaffeemehlbehälter in den Wasserbehälter zurückfließende, mit Kaffeestoffen angereicherte Wasser vermischt sich mit dem dort befindlichen Wasser, so daß es mehrfach in der Kammer des Wasserbehälters erhitzt und in den Kaffeemehlbehälter zurückgeleitet wird. Das mehrfache Erhitzen des bereits mit Kaffeestoffen angereicherten Wassers wirkt sich jedoch nachteilig auf die geschmackliche Qualität des Kaffees aus, zumal das aus dem Kaffeemehlbehälter zurückfließende, mit Kaffeestoffen angereicherte Wasser zunächst in relativ kaltes Wasser eingemischt und dann erneut in der Kammer des Wasserbehälters zum Kochen gebracht wird.

Aufgabe der Erfindung ist, einen Weg zu zeigen, wie eine Vermischung des mit Kaffeestoffen angereicherten Wasser mit dem Wasser in dem Wasserbehälter vermieden werden kann.

Diese Aufgabe wird erfindungsgemäß dadurch gelöst, daß der Wasserbehälter druckdichtverschließbar ist und daß die Öffnung mittels eines vom Druck des Wasserdampfs im Wasserbehälter verschließbaren Klappenventils absperrbar ist. Bei einer solchen Kaffeemaschine wird zunächst das gesamte im Wasserbehälter befindliche Wasser bis zum Kochen erhitzt. Der Dampfdruck des kochenden Wassers schließt das Klappenventil, so daß das gesamte kochende Wasser in relativ kurzer Zeit über das Steigrohr nach oben in den Kaffeemehlbehälter gedrückt wird. Der Kaffeemehlbehälter ist so bemessen, daß er im wesentlichen die gesamte Wassermenge des Wasserbehälters auf einmal aufnehmen kann. Nach Abfließen des Wassers aus dem Wasserbehälter nimmt der Dampfdruck in dem Wasserbehälter ab, so daß das Klappenventil wieder öffnet und das mit Kaffeestoffen angereicherte Wasser in den im wesentlichen leeren Wasserbehälter zurückfließen kann.

Vorteilhafte Weiterbildungen der Erfindung sind in den Unteransprüchen beschrieben. Von besonderer Bedeutung sind Ausführungsformen, bei welchen der Kaffeemehlbehälter zugleich das Steigrohr trägt und an seinem Boden die von dem Klappenventil abzusperrende Öffnung aufweist. Bei solchen Ausgestaltungen besteht die Kaffeemaschine im wesentlichen aus zwei Hauptbestandteilen, nämlich dem Wasserbehälter und dem Kaffeemehlbehälter, wobei der Kaffeemehlbehälter die zur Herstellung des Kaffees benötigten Bauelemente umfaßt, während der Wasserbehälter beliebige Form haben kann, also auch in Form einer zum Servieren des Kaffees geeigneten Kaffeekanne ausgebildet sein kann. Das Wasser im Wasserbehälter kann mittels einer externen Wärmequelle, beispielsweise einem Küchenherd oder dergleichen erwärmt werden. Bevorzugt ist jedoch an dem Kaffeemehlbehälter eine elektrische Heizeinrichtung, beispielsweise nach Art eines Tauchsieders angebracht, die bis in den Bodenbereich des Wasserbehälters hinabreicht. Eine elektrische Thermostatsteuerung, wie sie bei Kaffeemaschinen üblich ist, kann gegebenenfalls zur Steuerung der Heizeinrichtung sowohl beim Erhitzen des Wassers als auch beim Warmhalten des fertiggestellten Kaffees vorgesehen sein. Der Kaffeemehlbehälter, der zweckmäßigerweise als Filterbehälter ausgebildet ist, ist vorzugsweise auf den Wasserbehälter aufsteckbar, wobei die erforderlichen Haltekräfte durch eine an dem Kaffeemehlbehälter angebrachte Dichtung erzeugt werden können. Eine solche Dichtung hat zugleich die Funktion eines Sicherheitsventils, derart, daß der Kaffeemehlbehälter bei Überdruck im Wasserbehälter abgehoben wird.

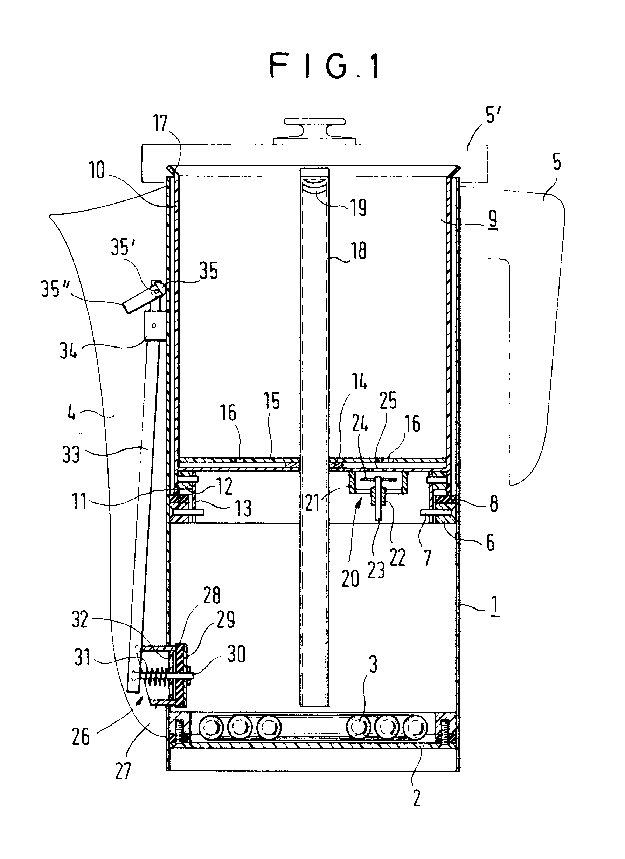

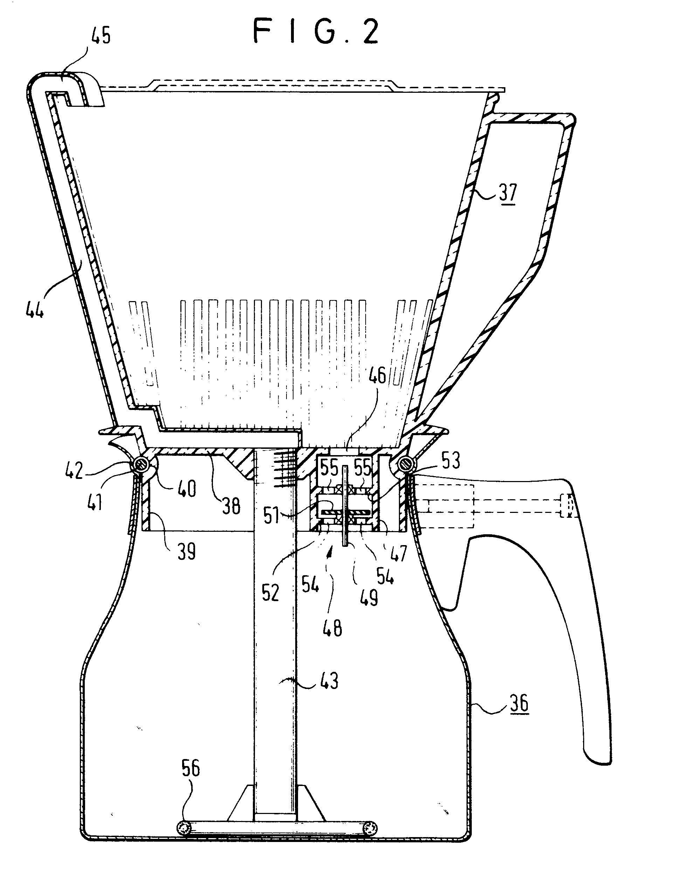

Im folgenden sollen Ausführungsbeispiele der Erfindung anhand von Zeichnungen näher erläutert werden. Hierbei zeigen die Figuren 1 und 2 seitliche Schnittansichten je einer nach dem Filterprinzip arbeitenden Kaffeemaschine.

Wie man anhand von Fig. 1 erkennen kann, besteht die erste Ausführungsform der erfindungsgemäßen Kaffeemaschine im wesentlichen aus einem zylindrischen Kaffeekessel 1, welcher im Bereich seines Bodens 2 eine Heizspirale 3 aufweist.

Diese Heizspirale 3 ist mit Hilfe eines nicht dargestellten Thermostats temperaturmäßig gesteuert, wobei zusätzlich eine ebenfalls nicht dargestellte Kontrolleuchte vorgesehen ist, welche aufleuchtet, sobald die Heizspirale 3 nach Betätigung eines Schalters von Strom durchflossen ist. Der zylindrische Kaffeekessel 1 weist fernerhin auf der einen Seite einen Ausgußschnabel 4 auf, welcher bis in den Bereich des Bodens 2 heruntergezogen ist. Auf der gegenüberliegenden Seite ist der Kaffeekessel 1 mit einem Griff 5 versehen. Nach oben hin ist der Kaffeekessel 1 schließlich mit Hilfe eines Deckels 5' verschließbar.

Etwas unterhalb der Mitte weist der Kaffeekessel 1 auf der Innenseite einen Ring 6 auf, von welchem eine Mehrzahl von gleichmäßig entlang des Umfangs verteilter Stifte 7 nach innen ragen. Nach oben hin liegt fernerhin auf dem Ring 6 eine entsprechend ausgebildete Gummiabdichtung 8 auf.

Innerhalb des Kaffeekessels 1 ist ein Einsatz 9 angeordnet, welcher im wesentlichen aus einem zylindrischen Behälter 10 besteht, dessen nach unten gezogender vorspringender Rand 11 auf der Gummiabdichtung 8 zum Aufliegen gelangt. An dem nach unten gezogenen Rand 11, welcher eine Verlängerung der zylindrischen Wand des Behälters 10 bildet, ist ein Ring 12 befestigt, welcher wiederum eine Ringhülse 13 trägt, die mit entsprechenden Einschnitten versehen ist, welche beim Einsetzen des Einsatzes 9 in den Kaffeekessel 1 bajonettartig an den Stiften 7 zum Einrasten gelangen, wodurch der untere Teil des Kaffeekessels 1 hermetisch abgeschlossen wird.

Innerhalb des zylindrischen Behälters 10 ist eine mittig angeordnete Distanzscheibe 14 sowie eine darüberliegende Lochplatte oder Drahtgewebesieb 15 angeordnet, welche den ganzen Boden des zylindrischen Behälters 10 abdeckt. Diese Lochplatte 15 ist mit einer Mehrzahl von gleichmäßig entlang des Umfangs verteilten Öffnungen 16 versehen. Auf diese Lochplatte 15 wird vor dem Einfüllen des Kaffeemehls ein mit einer mittigen Bohrung versehenes, nicht gezeigtes Filterpapier gelegt. Der zylindrische Behälter 10 ist in seinem oberen Bereich schließlich mit einem nach außen gebogenen Rand 17 versehen.

Der durch die Gummidichtung 8 in Verbindung mit dem Rand 11 des Einsatzes 9 abgeschlossene untere Teil des Kaffeekessels 1 ist über verschiedene Öffnungen mit der Außenumgebung verbindbar. Eine erste Verbindung erfolgt mittels eines mittig in dem Boden 2 des zylindrischen Behälters 10 angeordneten Steigrohrs 18, dessen unteres bis in den Bodenbereich des Kaffeekessels 1 ragendes Ende offen ist, während das bis in Höhe des Randes 17 ragende, an sich verschlossene obere Ende eine Anzahl von schrägen Einschnitten 19 aufweist, welche das Austreten des im Bodenbereich des Kaffeekessels 1 erhitzten Wassers unter gleichzeitiger Umlenkung gestattet. Eine zweite Verbindung erfolgt über ein unterhalb des Bodens 2 des zylindrischen Behälters 10 angeordnetes Klappenventil 20, welches im wesentlichen aus einer an dem Boden des zylindrischen Behälters 10 befestigten Halterung 21 besteht, die mit einer mittigen Buchse 22 versehen ist, entlang welcher ein Stift 23 verschiebbar gelagert ist, der an seinem oberen Ende einen Ventilteller 24 trägt. Dieser Ventilteller 24 ist so ausgebildet, daß er in der angehobenen Position eine Bohrung 25 verschließt, welche im Bereich des Bodens des zylindrischen Behälters 10 vorgesehen ist. Eine dritte Verbindung erfolgt schließlich über ein im Bereich des unteren Endes des Ausgußschnabels 4 angeordnetes steuerbares Ventil 26, welches im wesentlichen aus einem in die Seitenwandung des Kaffeekessels 1 eingesetzten Rohrstücks 27, einer die Innenseite dieses Rohrstücks 27 verschließbaren Gummischeibe 28, einem auf der Rückseite der Gummischeibe 28 aufliegenden Plättchen 29, einem mittig innerhalb des

0024357

Rohrstücks 27 angeordneten Zugstift 30, einer den Zugstift 30 umgebenden Druckfeder 31, einer eine Anlagefläche für die Druckfeder 31 bildenden, bis in den mittleren Bereich innerhalb des Rohrstücks 27 ragenden Halterung 32, einem an dem freien Ende des Zugstifts 30 angreifenden Schwenkhebel 33, einer im oberen Bereich auf der Außenwandung des Kaffeekessels 1 befestigten Schwenkhebellagerung 34, einem an dem oberen Ende des Schwenkhebels 33 angreifenden, sich an der Seitenwandung des Kaffeekessels 1 abstützenden Exzenternocken 35, einer an dem Exzenternocken 35 angreifenden, seitlich aus dem Ausgußschnabel 4 herausragenden Welle 35' befestigten Betätigungshebel 35'' besteht.

Die Funktionsweise der beschriebenen Kaffeemaschine ist wie folgt: Nach dem Einfüllen von Wasser in den unteren Teil des Kaffeekessels 1 wird der aus zylindrischem Behälter 10 und Steigrohr 18 bestehende Einsatz 9 in den Kaffeekessel 1 eingesetzt, wobei die in der Ringhülse 13 angeordneten Einschnitte an den Stiften 7 zum Einrasten gelangen. Aufgrund der Gummiabdichtung 8 wird dadurch der untere Teil des Kaffeekessels 1 verschlossen. Anschliessend daran wird ein mit einer mittigen Bohrung versehenes Filterpapier über den oberen Rand des Steigrohres 18 geschoben, so daß es auf der Lochplatte bzw. auf dem Drahtgewebe 15 zu liegen gelangt. Auf dieses Filterpapier wird dann eine gewünschte Menge von Kaffeemehl geschüttet. Daraufhin wird die Kaffeemaschine mit Hilfe des nicht dargestellten Schalters eingeschaltet, wodurch die Heizspirale 3 unter Strom gesetzt wird, wobei gleichzeitig die nicht dargestellte Kontrollampe aufleuchtet.

Sobald das im unteren Teil des Kaffeekessels 1 befindliche Wasser zum Sieden gelangt, bewirkt der entstehende Dampf ein Anheben des Ventiltellers 23, wodurch ein Verschluß des Klappenventils 20 zustandekommt. Aufgrund des sich bildenden Dampfdrucks wird das Wasser durch das Steigrohr 18 hochgedrückt und bei seinem Austreten am oberen Ende des Steigrohrs 18 durch die Einschnitte 19 umgelenkt. Das siedende Wasser fällt somit auf das oberhalb des Filterpapiers bzw. der Lochplatte 15 befindliche Kaffeemehl, so daß es zu einer Mischung dieser beiden Bestandteile kommt. Wenn dann das ganze Wasser durch das Steigrohr 18 in den zylindrischen Behälter 10 des Einsatzes 9 hochgedrückt worden ist, ergibt sich eine Entlüftungsmöglichkeit über das Steigrohr 18 hindurch, was zur Folge hat, daß es im unteren Teil des Kaffeekessels 1 zu einem Druckabfall kommt. Dieses wiederum hat zur Folge, daß sich das Klappenventil 20 öffnet, so daß der innerhalb des zylindrischen Behälters 10 des Einsatzes 9 gebildete Kaffee in den unteren Teil des Kaffeekessels 1 zurückfließen kann, was sich im Hinblick auf eine Warmstellung des Kaffees sehr vorteilhaft erweist. Zum Ausschütten des Kaffees muß dann nur noch der Betätigungshebel 35'' geschwenkt werden, wodurch das steuerbare Ventil 26 in seine geöffnete Position gebracht wird, so daß ein Ausschütten über das Rohrstück 27 und den Ausgußschnabel 4 erfolgen kann.

Falls es gewünscht sein sollte, nicht gelochtes Filterpapier zu verwenden, besteht die Möglichkeit, das Steigrohr 18 in den Randbereich des Kaffeekessels 1 zu verlegen. In diesem Fall erscheint es zweckmäßig, den an der Wandung des Kaffeekessels 1 anliegenden Teil des Griffes 5 bis in den Bodenbereich des Kaffeekessels 1 zu verlängern, so daß das Steigrohr 18 innerhalb dieser Verlängerung angeordnet werden kann. Der Ausgußschnabel 4 kann unter Umständen vollkommen weggelassen werden, in welchem Fall die Abgabe des Kaffees unmittelbar aus dem Rohrstück 27 heraus erfolgt. Andererseits besteht auch die Möglichkeit, auf das steuerbare Ventil 26 mit seinen Betätigungselementen 33 - 35 überhaupt zu verzichten und das untere Ende des Ausgußschnabels 4 zu einer oberhalb des Rings 6 liegenden Öffnung des Kaffeekessels 1 zu führen. In diesem Fall erfolgt dann das Ausgießen des Kaffees dadurch, daß nach der Herstellung des Kaffees der Einsatz 9 aus dem Kaffeekessel herausgenommen wird, worauf der Kaffeekessel 1 als ganz normaler Kaffeebehälter weiterverwendet werden kann.

Anstelle des durch die Stifte 7 und die Ringhülse 13 gebildeten Bajonettverschlusses kann ebenfalls ein an sich bekannter Schraubverschluß verwendet werden. Es besteht fernerhin die Möglichkeit, daß der Boden des zylindrischen Behälters 10 mit einer Anzahl von Rippen versehen wird, in welchem Fall die Distanzscheibe 14 und die Lochplatte 15 nicht benötigt werden. Schließlich kann auf das Vorsehen einer Heizspirale 3 einschließlich Thermostat, Kontrollampe und Schalter verzichtet werden, falls es gewünscht sein sollte, daß das Aufheizen des Kaffeekessels 1 mit Hilfe einer äußeren Wärmequelle - beispielsweise der Flamme eines Gasherds oder der Heizplatte eines Elektroherds - erfolgt.

Die in Fig. 2 dargestellte Kaffeemaschine umfaßt einen als Glaskanne ausgebildeten Wasserbehälter 36, auf den ein Kaffeemehlbehälter 37 aufgesetzt ist. Der Kaffeemehlbehälter 37 ist zur Aufnahme von nicht dargestellten Filterpapiertüten oder Drahtgewebeeinsätzen bestimmt; seine Wandform ist der Form der Filterpapiertüten angepaßt. Vom Boden 38 des Kaffeemehlbehälters 37 ragt ein der Randform des Wasserbehälters 36 angepaßter Ringansatz 39 in den Wasserbehälter 36 hinein und führt den Kaffeemehlbehälter 37 kippsicher im Hals des Wasserbehälters 36. In einer Umfangskehle 40 am Außenumfang des Ringansatzes 39 sitzt eine Ringdichtung 41, die in eine hinterschnittene Umfangskehle 42 am Hals des Wasserbehälters 36 einschnappt.

Von einer Stelle geringfügig oberhalb des Bodens des Wasserbehälters 36 führt ein erster, am Boden 38 des Kaffeemehlbehälters 37 gehaltener Steigrohrabschnitt 43 nach oben. Der erste Steigrohrabschnitt 43 setzt sich in einem zweiten Steigrohrabschnitt 44 entlang des Bodens 38 und der Seitenwand des Kaffeemehlbehälters 37 nach oben fort. Ein Krümmer
45 lenkt den zweiten Steigrohrabschnitt 44 von oben her in
den Kaffeemehlbehälter 37 hinein.

Unterhalb einer Öffnung 46 im Boden 38 des Kaffeemehlbehälters 37 sitzt in einem Rohransatz 47 ein Klappenventil 48
mit einer an einem Stift 49 befestigten, kreisförmigen
Scheibe 51 aus gummielastischem Material. Der Stift 49 ist
in zwei im Abstand voneinander angeordneten Führungsnaben
52 bzw. 53 in der Gebrauchsstellung etwa vertikal verschiebbar geführt. Die Führungsnaben 52, 53 sind mit Durchtrittsöffnungen 54 bzw. 55 versehen. Die Scheibe 51 ist zwischen
den beiden Naben 52, 53 angeordnet und zwar so, daß sie in
ihrer unteren Stellung die Durchgangsöffnungen 54, 55 freigibt und in ihrer oberen Stellung die Durchgangsöffnungen
55 verschließt. Zwischen dem Außenumfang der Scheibe 51 und
dem Innenmantel des Rohransatzes 47 verbleibt ein Ringspalt.

An dem unteren Steigrohrabschnitt 43 oder z.B. am Boden 38
des Kaffeemehlbehälters 37 oder einem anderen, am Kaffeemehlbehälter 37 angebrachten Halter ist eine elektrische
Heizeinrichtung angebracht, deren Außenabmessungen kleiner
als die lichte Weite des Halses des Wasserbehälters 36 sind.
Die Heizeinrichtung 56 ist mit einer elektrischen Thermostateinrichtung verbunden, die die Heizeinrichtung 56 bei
Überschreiten eines vorbestimmten Temperaturstromverbrauchs
abschaltet. Die Heizeinrichtung 56 kann, wenn eine externe
Wärmequelle zur Verfügung steht, gegebenenfalls entfallen.

Im Betrieb der Kaffeemaschine wird das in dem Wasserbehälter
36 befindliche Wasser zum Kochen gebracht, wobei der Dampfdruck des kochenden Wassers das Klappenventil 48 schließt.
Das kochende Wasser wird daraufhin über die Steigrohrabschnitte 43 und 44 in den Kaffeemehlbehälter 37 gedrückt,
in dem sich das Kaffeemehl in der Filterpapiertüte oder auf dem Drahtgewebesieb befindet. Läßt der Dampfdruck im Wasserbehälter 36 nach, so fließt das mit Kaffeestoffen angereicherte Wasser über die Öffnungen 46, 55 und 54 des dann geöffneten Klappenventils 48 zurück in den Wasserbehälter 36. Der Dichtring 41 bildet zusammen mit der hinterschnittenen Umfangskehle 42 ein Überdruckventil.

In Fig. 2 ist der erste Steigrohrabschnitt 43 zentrisch dargestellt. Er kann ebensogut an der Peripherie des Bodens 38 vorgesehen sein. Ebenso kann der zweite Steigrohrabschnitt 44 nicht auf der Außenseite des Kaffeemehlbehälters 37, sondern auf dessen Innenseite vorgesehen sein. Anstelle von Filterpapiertüten können ebenso bei geeigneter Ausgestaltung des Bodens des Kaffeemehlbehälters auch Filterpapierscheiben verwendet werden. Schließlich können anstelle von Filterpapieren auch Filternetze, Drahtgewebesiebe oder dergleichen verwendet werden.

Beide Ausführungsformen lassen sich selbstverständlich nicht nur zur Herstellung von Filterkaffee, sondern auch von gefiltertem Tee benutzen.

Schließlich sei darauf hingewiesen, daß die Heizorgane der Heizeinrichtung 56 vorzugsweise unterhalb der unteren Öffnung des Steigrohrabschnitts 43 angeordnet sind, so daß die Heizeinrichtung 56 stets in einem auf diese Weise im Wasserbehälter 36 verbleibenden Wasserrest untertaucht.

- 1 -

Kaffeemaschine

<u>Patentansprüche</u>

1. Kaffeemaschine mit einem dem Einfluß einer Wärmequelle aussetzbaren, verschließbaren Wasserbehälter, einem oberhalb des Wärmebehälters angeordneten Kaffeemehlbehälter, einem das Wasser vom Wasserbehälter nach oben in den Kaffeemehlbehälter leitenden Steigrohr und einer im oberen Bereich des Wasserbehälters sich befindenden Öffnung zwischen Wasserbehälter und Kaffeemehlbehälter, über die das Wasser nach Durchlauf durch den Kaffeemehlbehälter erneut in den Wasserbehälter zurückführbar ist, dadurch g e k e n n z e i c h n e t , daß der Wasserbehälter (1; 36) druckdicht verschließbar ist und daß die Öffnung (25; 55) mittels eines vom Druck des Wasserdampfs im Wasserbehälter (1; 36) verschließbaren Klappenventils (20; 48) absperrbar ist.

2. Kaffeemaschine nach Anspruch 1, dadurch g e k e n n - z e i c h n e t , daß der Kaffeemehlbehälter (9; 37) als abnehmbarer Aufsatz auf den Wasserbehälter (1; 36)

0024357

ausgebildet ist, dessen Boden (38) die vom Klappenventil (20; 48) abperrbare Öffnung (25; 55) aufweist.

3. Kaffeemaschine nach Anspruch 2, dadurch g e k e n n - z e i c h n e t , daß vom Boden (38) des Kaffeemehlbehälters (37) ein in den Wasserbehälter (36) eingreifender Ringansatz (39) absteht, an dessen Außenumfang eine Ringdichtung (41) gehalten ist.

4. Kaffeemaschine nach Anspruch 1, dadurch g e k e n n - z e i c h n e t , daß das Steigrohr (43, 44) am Kaffeemehlbehälter (37) befestigt ist und im Bereich des Kaffeemehlbehälter (37) in der Nähe einer Seitenwand des Kaffeemehlbehälters (37) von dessen Bodenbereich zu dessen Oberseite geführt ist.

5. Kaffeemaschine nach Anspruch 1, dadurch g e k e n n - z e i c h n e t , daß das obere Ende des Steigrohrs (18; 43, 44) einen das austretende Wasser von oben nach unten richtenden Mündungsbereich (19; 45) hat.

6. Kaffeemaschine nach Anspruch 5, dadurch g e k e n n - z e i c h n e t , daß das Steigrohr (18), dessen obere Stirnfläche verschlossen ist, im oberen Bereich schräg nach unten gerichtete Einschnitte (19) aufweist.

7. Kaffeemaschine nach Anspruch 1, dadurch g e k e n n - z e i c h n e t , daß das Klappenventil (20; 48) einen in Gebrauchslage im wesentlichen vertikal verschiebbar geführten, die Öffnung (25; 55) in seiner unteren Stellung freigebende, in seiner oberen Stellung abdeckenden Ventilteller (24; 51) aufweist.

8. Kaffeemaschine nach Anspruch 7, dadurch g e k e n n - z e i c h n e t , daß der Ventilteller (24; 51) als Scheibe aus elastischem Material ausgebildet und an

0024357

einem im wesentlichen vertikal verschiebbar geführten Führungsstift (23; 49) befestigt ist.

9. Kaffeemaschine nach Anspruch 1, dadurch g e k e n n - z e i c h n e t , daß an dem Kaffeemehlbehälter eine in den Bodenbereich des Wasserbehälters hineinreichende elektrische Heizeinrichtung gehalten ist.

10. Kaffeemaschine nach Anspruch 1, dadurch g e k e n n - z e i c h n e t , daß der Kaffeemehlbehälter (9; 37) als Aufnahmebehälter für Filterpapier oder Drahtgewebe-siebeinsätze ausgebildet ist.

# F I G . 1

# FIG. 2

Europäisches Patentamt

**EUROPÄISCHER RECHERCHENBERICHT**

0024357

Nummer der Anmeldung

EP 80 10 4956

| Kategorie | Kennzeichnung des Dokuments mit Angabe. soweit erforderlich, der maßgeblichen Teile | betrifft Anspruch |
|---|---|---|
| | **EINSCHLÄGIGE DOKUMENTE** | |
| X | US - A - 2 824 509 (TROGDEN) <br> * Spalte 2, Zeilen 3-21; Figur 1 * | 1,2,3, 5,10 |
| | -- | |
| X | US - A - 2 513 594 (SNYDER) <br> * Spalte 6, Zeilen 5-69; Figuren 1 und 4 * | 1,2,3, 6,10 |
| | -- | |
| X | FR - A - 1 252 088 (AMATHIEU) <br> * Das ganze Dokument * | 1,2,3, 10 |
| | -- | |
| | FR - A - 548 064 (BABLON) <br> * Seite 2, Zeilen 17-47; Figur 1 * | 1,2,6, 10 |
| | -- | |
| | FR - A - 1 252 446 (PIAZZA) <br> * Figur 1 * | 4,5 |
| | -- | |
| | FR - A - 2 074 261 (MANCIOLI) <br> * Figur 1 * | 6 |
| | -- | |
| | FR - A - 941 460 (STAUFFER) <br> * Das ganze Dokument * | 9 |
| | ---- | |

**KLASSIFIKATION DER ANMELDUNG (Int. Cl.³)**

A 47 J 31/043
31/04

**RECHERCHIERTE SACHGEBIETE (Int. Cl.³)**

A 47 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-11-1980 | SCHARTZ |

EPA form 1503.1 06.78